(19) Europäisches Patentamt / European Patent Office / Office européen des brevets

(11) **EP 4 545 880 A1**

(12) **EUROPEAN PATENT APPLICATION**
published in accordance with Art. 153(4) EPC

(43) Date of publication:
**30.04.2025 Bulletin 2025/18**

(21) Application number: **23827282.7**

(22) Date of filing: **22.06.2023**

(51) International Patent Classification (IPC):
**F25B 41/40** (2021.01)    **F25B 1/00** (2006.01)

(52) Cooperative Patent Classification (CPC):
**F16L 11/04; F16L 11/08; F25B 1/00; F25B 41/40**

(86) International application number:
**PCT/JP2023/023237**

(87) International publication number:
**WO 2023/249100 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.06.2022 JP 2022101028**

(71) Applicant: **DAIKIN INDUSTRIES, LTD.**
**Osaka-shi, Osaka 530-0001 (JP)**

(72) Inventors:
• **AJIOKA, Shohei**
  **Osaka-Shi, Osaka 530-0001 (JP)**
• **KARUBE, Daisuke**
  **Osaka-Shi, Osaka 530-0001 (JP)**
• **KAMIYA, Yukinori**
  **Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

(54) **TRANSPORT METHOD, REFRIGERATION METHOD, REFRIGERATION SYSTEM, AND HOSE FOR REFRIGERATION SYSTEM**

(57)    Provided are a method for stably transporting fluoroethylene in a refrigeration system or air conditioning system, and a refrigeration method. The method for transporting a heat transfer fluid of the present disclosure is a method for transporting a heat transfer fluid in a refrigeration system or air conditioning system, including the step of circulating the heat transfer fluid through at least one hose in the system, wherein the heat transfer fluid contains fluoroethylene, and the at least one hose is formed of a resin. The method for transporting a heat transfer fluid according to the present disclosure enables stable transportation of fluoroethylene in a refrigeration system or in an air conditioning system.

EP 4 545 880 A1

**Description**

Technical Field

The present disclosure relates to a transport method, a refrigeration method, a refrigeration system, and a hose for refrigeration systems.

Background Art

PTL 1 discloses a technique relating to the use of flexible hoses capable of handling high-pressure fluids and providing a barrier against permeation loss in air conditioning and refrigeration systems.

Citation List

Patent Literature

PTL 1: JP2010-513827A

Summary of Invention

Technical Problem

An object of the present disclosure is to provide a method for stably transporting fluoroethylene in a refrigeration system or air conditioning system, a transport method, a refrigeration method, a refrigeration system, and a hose for refrigeration systems.

Solution to Problem

Specifically, the present disclosure includes, for example, the subject matter described in the following items.

Item 1

A method for transporting a heat transfer fluid in a refrigeration system or air conditioning system, comprising a circulation step of circulating the heat transfer fluid through at least one hose in the system, wherein

the heat transfer fluid contains fluoroethylene, and
the at least one hose is formed of a resin.

Item 1'

A method for transporting a heat transfer fluid in a refrigeration system or air conditioning system, comprising a circulation step of circulating the heat transfer fluid through at least one hose in the system, wherein

the heat transfer fluid contains fluoroethylene, and
the at least one hose is formed of a metal.

Item 2

The method according to Item 1, wherein the fluoroethylene contains at least one member selected from the group consisting of trifluoroethylene and 1,2-difluoroethylene.

Item 3

The method according to Item 2, wherein the fluoroethylene contains (E)-1,2-difluoroethylene.

Item 4

The method according to any one of Items 1 to 3, wherein the circulation step comprises at least one step selected from the group consisting of

the step of circulating the heat transfer fluid from the hose connected between an outlet of a compressor and an inlet of a condenser;
the step of circulating the heat transfer fluid through the hose connected between an outlet of a condenser and an inlet of an evaporator; and
the step of circulating the heat transfer fluid through the hose connected between an outlet of an evaporator and an inlet of a compressor.

Item 5

A refrigeration method comprising the step of performing refrigeration using the method according to any one of Items 1 to 3.

Item 6

A refrigeration system comprising a hose for circulating a heat transfer fluid, wherein

the heat transfer fluid contains fluoroethylene, and
the hose is formed of a resin.

Item 6'

A refrigeration system comprising a hose for circulating a heat transfer fluid, wherein

the heat transfer fluid contains fluoroethylene, and
the hose is formed of a metal.

Item 7

The refrigeration system according to Item 6, wherein the fluoroethylene is at least one member selected from the group consisting of trifluoroethylene and 1,2-difluoroethylene.

Item 8

The refrigeration system according to Item 6, wherein the fluoroethylene contains (E)-1,2-difluoroethylene.

Item 9

A hose for a refrigeration system, which is for use in the refrigeration system of any one of Items 6 to 8.••

Advantageous Effects of Invention

The transport method of the present disclosure is capable of stably transporting fluoroethylene.

Brief Description of Drawings

Fig. 1 is a diagram showing an example of the cross section of a hose used in the transport method according to the present disclosure.
Fig. 2 is a schematic diagram showing a refrigeration system or an air conditioning system using the method for transporting a heat transfer fluid according to the present disclosure.

Description of Embodiments

Fluoroethylene, typified by trans-1,2-difluoroethylene (which may be referred to as "HFO-1132(E)" below), shows promise as a novel refrigerant. To transport fluoroethylene, hoses made of various materials are available; however, no consideration has been given to the compatibility and permeability of fluoroethylene with the hoses. More specifically, no method has been established at present for stably transporting fluoroethylene in various systems, such as refrigeration systems or air conditioning systems.

In view of these circumstances, the present inventors conducted extensive research and found a method for stably transporting a heat transfer fluid containing fluoroethylene.

In the present disclosure, "stably transporting a heat transfer fluid (fluoroethylene)" includes the following: a heat transfer fluid can be transported without the refrigeration system and the hose for the refrigeration system being damaged by the pressure of the heat transfer fluid (i.e., pressure resistance); a heat transfer fluid can be transported without the materials used in the refrigeration system and the hose for the refrigeration system being deteriorated by the heat transfer fluid; and a heat transfer fluid can be transported while permeation of the heat transfer fluid from the refrigeration system and the hose for the refrigeration system is suppressed.

The following describes embodiments of the present disclosure in detail. In the present specification, the expressions "comprising" and "including" include the concepts of comprising, including, consisting essentially of, and consisting of.

In the present specification, a numerical range indicated with "to" means a range that includes the numerical values before and after "to" as the minimum and maximum values. In the numerical ranges described stepwise in the present specification, the upper limit or lower limit of a specific numerical range can be combined with the upper limit or lower limit of another numerical range. The upper or lower limit in a numerical range described in the present specification may be replaced with a value shown in the Examples or a value that can be unambiguously derived from the Examples.

1. Method for Transporting Heat Transfer Fluid

The method for transporting a heat transfer fluid according to the present disclosure is a method for transporting a heat transfer fluid in a refrigeration system or an air conditioning system, including the step of circulating a heat transfer fluid through at least one hose in the system, wherein the heat transfer fluid contains fluoroethylene. The hose is preferably formed of a resin.

The method for transporting a heat transfer fluid according to the present disclosure can reduce refrigerant loss during transport of the heat transfer fluid and enables stable transportation of a heat transfer fluid containing fluoroethylene.

Heat Transfer Fluid

The heat transfer fluid transported according to the transport method of the present disclosure contains fluoroethylene. Fluoroethylene is an ethylene compound having at least one fluorine atom. The fluoroethylene contained in the heat transfer fluid preferably has at least two fluorine atoms.

In particular, the fluoroethylene more preferably contains at least one member selected from the group consisting of trifluoroethylene, 1,1-difluoroethylene, and 1,2-difluoroethylene. From the viewpoint of facilitating more stable transport of fluoroethylene, the fluoroethylene more preferably contains 1,2-difluoroethylene. The fluoroethylene may consist of at least one member selected from the group consisting of trifluoroethylene, 1,1-difluoroethylene, and 1,2-difluoroethylene, or may consist of 1,2-difluoroethylene.

There are two isomers (E isomer and Z isomer) of 1,2-difluoroethylene, specifically, trans-1,2-difluoroethylene (HFO-1132(E)) and cis-1,2-difluoroethylene (HFO-1132(Z)). In the present disclosure, 1,2-difluoroethylene may be either one of the isomers or a mixture of both isomers. That is, the 1,2-difluoroethylene contained in the heat transfer fluid may be trans-1,2-difluoroethylene (HFO-1132(E)) and/or cis-1,2-difluoroethylene (HFO-1132(Z)).

In particular, it is preferred that 1,2-difluoroethylene contains at least (E)-1,2-difluoroethylene, i.e., trans-1,2-difluoroethylene (HFO-1132(E)). More specifically, 1,2-difluoroethylene contains preferably 50 mass% or more, more preferably 70 mass% or more, even more preferably 80 mass% or more, and particularly preferably 90 mass% or more of HFO-1132(E) based on the total mass of 1,2-difluoroethylene. 1,2-difluoroethylene may consist of HFO-1132(E).

The heat transfer fluid may contain a component other than fluoroethylene, such as a refrigerant other than fluoroethylene. The term "a refrigerant other than fluoroethylene" as used herein includes at least compounds that are specified in ISO 817 (International Organization for Standardization), and that are given a refrigerant number (ASHRAE number) representing the type of refrigerant with "R" at the beginning, and further includes refrigerants that have properties equivalent to those of such refrigerants, even though a refrigerant number is not yet given. Such refrigerants are broadly divided into fluorocarbon compounds and non-fluorocarbon compounds in terms of the structure of the compounds.

Fluorocarbon compounds include chlorofluorocarbons (CFC), hydrochlorofluorocarbons (HCFC), and hydrofluorocarbons (HFC). Non-fluorocarbon compounds include propane (R290), propylene (R1270), butane (R600), isobutane (R600a), carbon dioxide (R744), and ammonia (R717).

Examples of refrigerants other than fluoroethylene include 2,3,3,3-tetrafluoropropene (HFO-1234yf), HFC-32, R290 (propane), R744 (carbon dioxide), R1234ze, pentafluoroethane (HFC-125), 1,1,1,2-tetrafluoroethane (HFC-134a), 1,1,2,2-tetrafluoroethane (HFC-134), 1,1,1-trifluoroethane (HFC-143a), 1,1,2-trifluoroethane (HFC-143), 1,1-difluoroethane (HFC-152a), 1,2-difluoroethane (HFC-152), fluoroethane (HFC-161), 1,1,1,3,3-pentafluoropropane (HFC-245fa), 1,1,1,3,3,3-hexafluoropropane (HFC-236fa), 1,1,1,2,3,3-hexafluoropropane (HFC-236ea), and 1,1,1,2,3,3,3-heptafluoropropane (HFC-227ea). Of these, the refrigerant other than fluoroethylene preferably includes at least one member selected from the group consisting of HFC-32, HFC-152a, HFO-1234yf, R744, and R290. One embodiment of the heat transfer fluid is a mixture containing the fluoroethylene with HFO-1234yf and/or HFC-32.

If the heat transfer fluid contains HFO-1234yf, the percentage is not limited. For example, the heat transfer fluid preferably contains 40 mass% or more, more preferably 50 mass% or more, and even more preferably 70 mass% or more of HFO-1234yf, based on the total mass of the fluoroethylene and HFO-1234yf. The heat transfer fluid preferably contains 90 mass% or less, and more preferably 85 mass% or less, of HFO-1234yf based on the total mass of the fluoroethylene and HFO-1234yf.

If the heat transfer fluid further contains HFC-32, the percentage is not limited. For example, the heat transfer fluid preferably contains 5 mass% or more, more preferably 10 mass% or more, and even more preferably 20 mass% or more of HFC-32 based on the total mass of the fluoroethylene, HFO-1234yf, and HFC-32. The heat transfer fluid preferably contains 80 mass% or less, more preferably 50 mass% or less, even more preferably 30 mass% or less, and particularly preferably 22 mass% or less of HFC-32 based on the total mass of the fluoroethylene, HFO-1234yf, and HFC-32.

It is particularly preferred that the heat transfer fluid contains HFO-1132(E) and HFO-1234yf. The heat transfer fluid may consist of HFO-1132(E) and HFO-1234yf.

The method for producing the heat transfer fluid is not limited and can be selected, for example, from a wide variety of known production methods. For example, fluoroethylene produced according to a known method can be used to obtain the heat transfer fluid. HFO-1234yf to be contained in the heat transfer fluid can also be obtained according to a known method. A heat transfer fluid formed of a mixture of fluoroethylene and a refrigerant other than fluoroethylene can be obtained, for example, by mixing the two components in an appropriate ratio.

The heat transfer fluid may also contain a component other than refrigerants. Examples of components other than refrigerants include water and refrigeration oil. If the heat transfer fluid contains a component other than refrigerants, the proportion of the component is not limited. For example, the proportion of the component other than refrigerants based on the total mass of the refrigerant in the heat transfer fluid may be 10 mass% or less, preferably 5 mass% or less, and more preferably 3 mass% or less.

Hose

In the transport method of the present disclosure, the heat transfer fluid is transported through a hose. The material for forming the hose and its structure are not limited. For example, a wide variety of known hoses can be applied. In particular, the hose used in the transport method of the present disclosure is preferably formed of a resin or a metal, and more preferably formed of a resin. In this case, fluoroethylene can be transported more stably. Examples of resins include thermoplastic resin, thermosetting resin, and rubber. The resin may contain two or more of these. Specifically, for example, the hose may contain a thermoplastic resin and rubber.

From the viewpoint of making it easy to suppress the permeation of the heat transfer fluid containing fluoroethylene, the ethylene content (mol%) in the resin forming the hose is preferably 20 to 50 mol%, and more preferably 20 to 30 mol%, based on the total amount of the resin. The ethylene content in the resin can be measured from the melting point of EVOH.

One embodiment of the hose that can be used in the transport method of the present disclosure is, for example, a hose A having a core layer as disclosed in JP2002-370273A.

The hose A may be formed of a core layer (innermost layer) and a cover layer (outer layer) covering the core layer. A rubber layer (inner layer) may also be provided between the core layer (innermost layer) and the cover layer (outer layer). The core layer can be formed, for example, of various resins, specifically, EVOH, polyamide resin, or the like. The core layer may have a structure composed of an inner core layer and an outer core layer disposed outside the inner core layer, and such a structure may be formed, for example, by coextrusion. In this case, the inner core layer and the outer core layer may be formed from different resins. The rubber layer (inner layer) can be formed of various kinds of rubber, such as one or more rubber materials selected from the group consisting of nitrile-butadiene rubber (NBR), hydrogenated nitrile-butadiene rubber (HNBR), chlorosulfonated polyethylene rubber (CSM), ethylene-propylene-diene rubber (EPDM), butyl rubber (IIR), chlorinated butyl rubber (Cl-IIR), brominated butyl rubber (Br-IIR), epichlorohydrin rubber (CHR, CHC), acrylic rubber (ACM), and chloroprene rubber (CR). Of these, butyl rubber (IIR) and ethylene propylene diene rubber (EPDM) are preferred.

In the hose A, the cover layer (outer layer) can be formed of one or more rubber materials selected from the group consisting of nitrile-butadiene rubber (NBR), hydrogenated nitrile-butadiene rubber (HNBR), chlorosulfonated polyethylene rubber (CSM), ethylene-propylene-diene rubber (EPDM), butyl rubber (IIR), chlorinated butyl rubber (Cl-IIR), brominated butyl rubber (Br-IIR), epichlorohydrin rubber (CHR, CHC), acrylic rubber (ACM), and chloroprene rubber (CR).

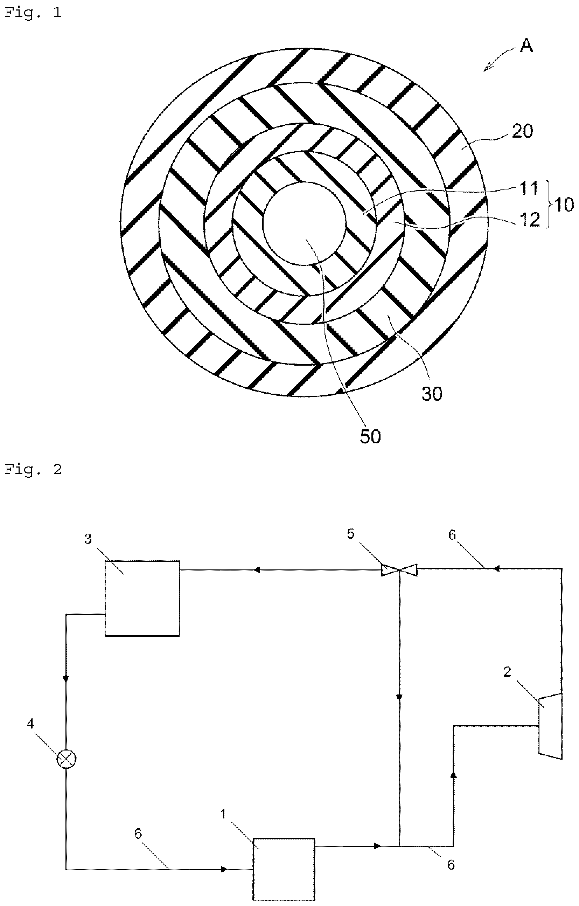

Fig. 1 is a diagram showing an example of the cross section of the hose A. The hose A shown in Fig. 1 includes a core layer 10 and a cover layer 20 that covers the core layer 10, and includes a rubber layer 30 between the core layer 10 and the cover layer 20. As shown in Fig. 1, the core layer 10 may be formed so as to include an inner core layer 11 and an outer core layer 12 that covers the inner core layer 11, as described above. Of course, the core layer 10 may be formed of only one layer. The core layer 10 has a cavity 50 formed inside.

The hose A can be formed of only the core layer and the cover layer (outer layer). Alternatively, as shown in Fig. 1, the hose A may optionally include the rubber layer (inner layer) between the core layer (innermost layer) and the cover layer (outer layer). The rubber layer (inner layer) is a "friction layer" and/or "reinforcing layer." For example, the hose A may have a structure in which the core layer is covered by the friction layer, the friction layer is covered by the reinforcing layer, and the reinforcing layer is covered by the cover layer. A support layer may be further present between the rubber layer (inner layer) and the cover layer (outer layer). The support layer is formed of a resin, such as polyethylene terephthalate (PET) or aramid resin. The support layer is omitted in Fig 1.

In the hose A, the friction layer can be formed of a polymer material, such as polyisoprene, polybutadiene, a copolymer of butadiene and acrylonitrile, a copolymer of butadiene and styrene, polychloroprene, polybutadiene, an ethylene-propylene copolymer, EPDM, an ethylene-propylene-norbornene terpolymer, an ethylene-propylene-1,4-hexadiene terpolymer, or an ethylene-propylene-dicyclopentadiene terpolymer.

The reinforcing layer may be made of a wide variety of materials used to reinforce hoses, such as various fibers. For example, the reinforcing layer can be formed by braiding, spiraling, knitting, or spirally knitting yarn.

The hose A preferably includes a core layer containing EVOH, and more preferably includes a core layer formed of an inner core layer made of polyamide 6 (PA6) and an outer core layer that covers the inner core layer and that is made of EVOH. This can further suppress the permeation of the heat transfer fluid containing fluoroethylene and thus particularly enables stable transport of fluoroethylene; this especially suppresses the permeation of 1,2-difluoroethylene noticeably.

The EVOH can be of any type, and a wide variety of known EVOH can be used.

From the viewpoint of making it easier to suppress the permeation of the heat transfer fluid containing fluoroethylene, the EVOH preferably has a free volume of 30 to 100 $Å^3$, and more preferably 30 to 50 $Å^3$. The free volume of EVOH can be measured by subjecting an EVOH sheet formed in a sheet shape to positron annihilation.

From the viewpoint of making it particularly easier to suppress the permeation of the heat transfer fluid containing fluoroethylene, the ethylene content (mol%) in EVOH is preferably 20 to 50 mol%, and more preferably 20 to 30 mol%, based on the total amount of EVOH. The ethylene content in EVOH can be measured from the melting point of EVOH.

An example of the hose A is a hose composed of a core layer (innermost layer), a rubber layer (inner layer), a support layer, and a cover layer (outer layer) stacked in this order (e.g., Hose-Flexible, High (92490-4BC0A) manufactured by Bridgestone Corporation). Another example of the hose A is a hose composed of a core layer formed of an inner core layer and an outer core layer (innermost layer), a rubber layer (inner layer), a support layer, and a cover layer (outer cover layer) stacked in this order (e.g., hoses manufactured by ContiTech).

In another embodiment, it is particularly preferred that the hose A is composed of a core layer formed of an inner core layer made of polyamide 6 (PA6) and an outer core layer covering the inner core layer made of EVOH (innermost layer), a rubber layer made of butyl rubber (IIR) and ethylene propylene diene rubber (EPDM) (inner layer), a support layer made of polyethylene terephthalate (PET), and a cover layer made of butyl rubber (IIR) and ethylene propylene diene rubber (EPDM) (outer layer). In this case, it is easy to suppress the permeability of the heat transfer fluid containing fluoroethylene through the hose, and particularly easy to stably transport the heat transfer fluid.

To further reduce the amount of the heat transfer fluid permeating through the hose, it is preferable to reduce the free volume of the resin (polymer) constituting the hose. Examples of such resins include EVOH; and polyamide resins such as PA6, PA66, Genestar (PA9T) from Kuraray Co., Ltd., Arlen (PA6T) from Mitsui Chemicals, Inc., and Reny from Mitsubishi Gas Chemical Company, Inc. Specifically, the resin forming the hose is preferably at least one member selected from the group consisting of EVOH and polyamide resins. In particular, the core layer is preferably at least one member selected from the group consisting of EVOH and polyamide resins.

An effective method for reducing the free volume of a resin, for example, a method for reducing the free volume of a polyamide resin, is to strengthen the intermolecular interaction to reduce the ease of molecular movement. Examples of intermolecular interaction include dipole interaction, hydrogen bonds, and London dispersion forces. In particular, it is effective to enhance π-π interaction, which is one of the London dispersion forces. An example of a structure having π-π interaction is a polyamide having an aromatic group in the molecular chain. The aromatic group may be present in the molecular structure of the amine component or in the molecular structure of the carboxylic acid component. Examples of polyamides having an aromatic group in the molecular chain include Genestar (PA9T) from Kuraray Co., Ltd., Arlen (PA6T) from Mitsui Chemicals, Inc., and Reny from Mitsubishi Gas Chemical Company, Inc., with Genestar from Kuraray Co., Ltd., being particularly preferred.

Another embodiment of the hose that can be used in the transport method of the present disclosure is, for example, a hose B that includes a rubber layer (inner layer), a support layer formed on the circumferential surface of the rubber layer, and a cover layer (outer layer) formed on the outer circumferential surface of the support layer, as disclosed in JP2006-29443A.

In the hose B, the rubber layer (inner layer) may be formed of a material containing (A) at least one member selected from the group consisting of butyl rubber and halogenated butyl rubber, (B) polybutene, and (C) a white filler. Examples of the white filler (C) include talc, mica, sericite, montmorillonite, silica, and clay.

In the hose B, the support layer can be formed by weaving reinforcing yarn, such as polyethylene terephthalate (PET), polyethylene naphthalate (PEN), aramid, polyamide (nylon), vinylon, rayon, or metal wire, into a spiral pattern, a knitted pattern, a braided pattern, etc.

In the hose B, the cover layer (outer layer) can be formed from, for example, a material prepared by blending a vulcanizing agent, carbon black, and other components with a rubber material, such as halogenated butyl rubber (e.g., butyl rubber (IIR), chlorinated butyl rubber (Cl-IIR), and brominated butyl rubber (Br-IIR)), acrylonitrile-butadiene rubber (NBR), chloroprene rubber (CR), ethylene-propylene-diene rubber (EPDM), ethylene-propylene rubber (EPM), fluororubber (FKM), epichlorohydrin rubber (ECO), acrylic rubber, silicon rubber, chlorinated polyethylene rubber (CPE), and urethane rubber. The outer layer may be made of a thermoplastic elastomer (TPE), such as acrylic, styrene, olefin, diolefin, vinyl chloride, urethane, ester, amide, fluorine, or silicon thermoplastic elastomers, or a heat-shrink tube.

Yet another embodiment of the hose that can be used in the transport method of the present disclosure is, for example, a hose C including a rubber layer (inner layer), a support layer, and a cover layer (outer layer) in this order, as disclosed in WO2017/010335A.

In the hose C, the rubber layer (inner layer) is preferably formed from a rubber composition containing a rubber component that includes at least one member selected from the group consisting of chlorosulfonated polyethylene rubber, butyl rubber, and chlorinated polyethylene rubber, and liquid butyl rubber.

In the hose C, the support layer may be formed of, for example, a fiber material, such as polyester fiber, polyamide fiber, aramid fiber, vinylon fiber, rayon fiber, polyparaphenylene benzobisoxazole fiber, polyketone fiber, polyarylate fiber, or polyketone fiber; or a metal material, such as hard steel wire, including brass-plated wire and zinc-plated wire (e.g.,). The support layer may be, for example, blade-shaped or spiral-shaped.

In the hose C, the cover layer (outer layer) can be formed of, for example, styrene-butadiene rubber, chloroprene rubber, or ethylene propylene diene rubber.

In the transport method of the present disclosure, when two or more hoses are used, the hoses may all be the same, or some or all of the hoses may be different.

The method for transporting a heat transfer fluid according to the present disclosure includes a circulation step of circulating the heat transfer fluid through at least one hose described above. As long as the circulation step is included, the method for transporting a heat transfer fluid according to the present disclosure is not limited.

The circulation step includes at least one step selected from the group consisting of the following steps 1, 2, and 3:

step 1: circulating the heat transfer fluid from the hose connected between the outlet of a compressor and the inlet of a condenser;
step 2: circulating the heat transfer fluid through the hose connected between the outlet of a condenser and the inlet of an evaporator; and
step 3: circulating the heat transfer fluid through the hose connected between the outlet of an evaporator and the inlet of a compressor.

For example, in the method for transporting a heat transfer fluid according to the present disclosure, the circulation step may include steps 1, 2, and 3 in this order.

Fig. 2 is a schematic diagram showing a transport method including steps 1 to 3 described above, and in particular a schematic diagram showing a refrigeration system or an air conditioning system. The method for transporting a heat transfer fluid according to the present disclosure may include an evaporator 1, a compressor 2, a condenser 3, and an expansion device 4, as shown in Fig 2.

As shown in Fig. 2, from the evaporator 1, the heat transfer fluid flows through a hose 6 into the inlet of the compressor 2 and is then discharged. The evaporator 1 and the compressor 2 can be of any type. For example, known evaporators and compressors that can be used in refrigeration systems or air conditioning systems can also be used in the transport method of the present disclosure.

The heat transfer fluid compressed by the compressor flows through the outlet of the compressor and the hose 6 to the condenser 3. The hose 6 may include a pressure-regulating valve 5 inside. The compressed heat transfer fluid is condensed in the condenser 3 to release heat. Condenser-cleaning heat transfer fluid (liquid refrigerant) passes through the expansion device 4 and flows through the hose 6 to the evaporator 1, which is located in a passenger compartment in cooling mode. In the evaporator 1, the liquid refrigerant vaporizes to provide cooling. In heating mode, a gaseous refrigerant compressed by the compressor 2 flows into the condenser 3 located in a passenger compartment. In the condenser 3, the refrigerant liquefies to provide warm air. In the method for transporting a heat transfer fluid according to the present disclosure, the cycle described above occurs and constructs a refrigeration system or an air conditioning system.

The hose 6 is preferably the hose A, hose B, hose C, or the like. When two or more hoses are used, the hoses may all be the same, or some or all of the hoses may be different.

The method for transporting a heat transfer fluid according to the present disclosure can be applied to various refrigeration systems or air conditioning systems, such as in stationary refrigeration or air conditioning in buildings or in mobile refrigeration or air conditioning in vehicles.

Refrigeration Method

The method for transporting a heat transfer fluid according to the present disclosure can also be applied to a refrigeration method. Thus, the refrigeration method according to the present disclosure may include the step of performing refrigeration using the method for transporting a heat transfer fluid according to the present disclosure. In other words, the refrigeration method of the present disclosure performs refrigeration by using the heat transfer fluid transported by the transport method of the present disclosure. Thus, the refrigeration method of the present disclosure includes a circulation step of circulating the heat transfer fluid through at least one hose described above, and the heat transfer fluid contains fluoroethylene. Because the refrigeration method of the present disclosure includes the transport method of the present disclosure, the refrigeration method can reduce refrigerant loss during the transport of the heat transfer fluid and stably transport the heat transfer fluid containing fluoroethylene, thereby achieving an excellent refrigerating capacity.

2. Apparatus

The apparatus of the present disclosure includes at least one hose and a heat transfer fluid, and is for circulating the heat transfer fluid through the hose. The heat transfer fluid contains fluoroethylene.

In the apparatus of the present disclosure, the hose can be of any type. For example, a wide variety of known hoses can be used, such as hoses made of a resin or metal. A hose formed of a resin is preferable; in particular, it is more preferable to use hoses such as the hose A, hose B, or hose C, described above, with the hose A being particularly preferable. When the apparatus of the present disclosure includes two or more hoses, the hoses may all be the same, or some or all of the hoses may be different.

The heat transfer fluid circulated in the apparatus of the present disclosure is the same as the heat transfer fluid circulated in the transport method of the present disclosure described above. Thus, the fluoroethylene contained in the heat transfer fluid circulated in the apparatus of the present disclosure more preferably contains at least one member selected from the group consisting of trifluoroethylene and 1,2-difluoroethylene, and even more preferably contains 1,2-difluoroethylene. The fluoroethylene may consist of at least one member selected from the group consisting of trifluoroethylene and 1,2-difluoroethylene, or may consist of 1,2-difluoroethylene.

In the apparatus of the present disclosure as well, 1,2-difluoroethylene preferably contains trans-1,2-difluoroethylene (HFO-1132(E)). More specifically, 1,2-difluoroethylene contains preferably 50 mass% or more, more preferably 70 mass% or more, even more preferably 80 mass% or more, and particularly preferably 90 mass% or more of HFO-1132(E) based on the total mass of 1,2-difluoroethylene. 1,2-Difluoroethylene may consist of HFO-1132(E).

In the apparatus of the present disclosure, the heat transfer fluid may contain a component other than fluoroethylene, which can be the same as, for example, the component other than fluoroethylene used in the transport method of the present disclosure. Thus, examples of refrigerants other than fluoroethylene include 2,3,3,3-tetrafluoropropene (HFO-1234yf), HFC-32, R290 (propane), R744 (carbon dioxide), R1234ze, pentafluoroethane (HFC-125), 1,1,1,2-tetrafluoroethane (HFC-134a), 1,1,2,2-tetrafluoroethane (HFC-134), 1,1,1-trifluoroethane (HFC-143a), 1,1,2-trifluoroethane (HFC-143), 1,1-difluoroethane (HFC-152a), 1,2-difluoroethane (HFC-152), fluoroethane (HFC-161), 1,1,1,3,3-pentafluoropropane (HFC-245fa), 1,1,1,3,3,3-hexafluoropropane (HFC-236fa), 1,1,1,2,3,3-hexafluoropropane (HFC-236ea), and 1,1,1,2,3,3,3-heptafluoropropane (HFC-227ea). In particular, the refrigerant other than fluoroethylene preferably contains at least one member selected from the group consisting of HFC-32, HFC-152a, HFO-1234yf, R744, and R290. One embodiment of the heat transfer fluid is a mixture containing the fluoroethylene, HFO-1234yf, and HFC-32.

If the heat transfer fluid contains HFO-1234yf, the percentage is not limited. For example, the heat transfer fluid preferably contains 40 mass% or more, more preferably 50 mass% or more, and even more preferably 70 mass% or more of HFO-1234yf, based on the total mass of the fluoroethylene and HFO-1234yf. The heat transfer fluid preferably contains 90 mass% or less, and more preferably 85 mass% or less, of HFO-1234yf based on the total mass of the fluoroethylene and HFO-1234yf.

If the heat transfer fluid further contains HFC-32, the percentage is not limited. For example, the heat transfer fluid preferably contains 5 mass% or more, more preferably 10 mass% or more, and even more preferably 20 mass% or more of HFC-32 based on the total mass of the fluoroethylene, HFO-1234yf, and HFC-32. The heat transfer fluid preferably contains 80 mass% or less, more preferably 70 mass% or less, even more preferably 60 mass% or less, and particularly preferably 50 mass% or less, of HFC-32 based on the total mass of the fluoroethylene, HFO-1234yf, and HFC-32.

It is particularly preferred that the heat transfer fluid contains HFO-1132(E) and HFO-1234yf. The heat transfer fluid may consist of HFO-1132(E) and HFO-1234yf.

The apparatus according to the present disclosure can suppress refrigerant loss during the circulation of a heat transfer fluid containing fluoroethylene, thereby stably transporting fluoroethylene. Thus, the apparatus according to the present disclosure can be suitably used in various refrigerating machines and various air conditioners, such as in stationary refrigeration or air conditioning in buildings, or in mobile refrigeration or air conditioning in vehicles.

3. Refrigeration System and Hose for Refrigeration System

The refrigeration system according to the present disclosure includes a hose for circulating a heat transfer fluid, and the heat transfer fluid contains fluoroethylene.

The heat transfer fluid circulated in the refrigeration system of the present disclosure is the same as the heat transfer fluid circulated in the transport method of the present disclosure described above. Thus, the fluoroethylene contained in the heat transfer fluid circulated in the refrigeration system of the present disclosure more preferably contains at least one member selected from the group consisting of trifluoroethylene and 1,2-difluoroethylene, and even more preferably contains 1,2-difluoroethylene. The fluoroethylene may consist of at least one member selected from the group consisting of trifluoroethylene and 1,2-difluoroethylene, or may consist of 1,2-difluoroethylene.

In the refrigeration system of the present disclosure as well, 1,2-difluoroethylene preferably contains trans-1,2-difluoroethylene (HFO-1132(E)). More specifically, 1,2-difluoroethylene contains preferably 50 mass% or more, more preferably 70 mass% or more, even more preferably 80 mass% or more, and particularly preferably 90 mass% or more of HFO-1132(E) based on the total mass of 1,2-difluoroethylene. 1,2-Difluoroethylene may consist of HFO-1132(E).

In the refrigeration system of the present disclosure, the heat transfer fluid may contain a component other than fluoroethylene, which can be the same as, for example, the component other than fluoroethylene used in the transport method of the present disclosure. Thus, examples of refrigerants other than fluoroethylene include 2,3,3,3-tetrafluoropropene (HFO-1234yf), HFC-32, R290 (propane), R744 (carbon dioxide), R1234ze, pentafluoroethane (HFC-125), 1,1,1,2-tetrafluoroethane (HFC-134a), 1,1,2,2-tetrafluoroethane (HFC-134), 1,1,1-trifluoroethane (HFC-143a), 1,1,2-trifluoroethane (HFC-143), 1,1-difluoroethane (HFC-152a), 1,2-difluoroethane (HFC-152), fluoroethane (HFC-161), 1,1,1,3,3-pentafluoropropane (HFC-245fa), 1,1,1,3,3,3-hexafluoropropane (HFC-236fa), 1,1,1,2,3,3-hexafluoropropane (HFC-236ea), and 1,1,1,2,3,3,3-heptafluoropropane (HFC-227ea). In particular, the refrigerant other than fluoroethylene preferably contains at least one member selected from the group consisting of HFC-32, HFC-152a, HFO-1234yf, R744, and R290. One embodiment of the heat transfer fluid is a mixture containing the fluoroethylene, HFO-1234yf, and HFC-32.

If the heat transfer fluid contains HFO-1234yf, the percentage is not limited. For example, the heat transfer fluid preferably contains 40 mass% or more, more preferably 50 mass% or more, and even more preferably 70 mass% or more of HFO-1234yf, based on the total mass of the fluoroethylene and HFO-1234yf.

In the refrigeration system of the present disclosure, if the heat transfer fluid further contains HFC-32, the percentage is not limited. For example, the heat transfer fluid preferably contains 5 mass% or more, more preferably 10 mass% or more, and even more preferably 20 mass% or more of HFC-32 based on the total mass of the fluoroethylene, HFO-1234yf, and HFC-32.

In the refrigeration system of the present disclosure, it is particularly preferred that the heat transfer fluid contains HFO-1132(E) and HFO-1234yf. The heat transfer fluid may consist of HFO-1132(E) and HFO-1234yf.

In the refrigeration system of the present disclosure, the hose can be made of any material and can be of any structure. For example, a wide variety of known hoses can be used, such as hoses made of a resin or metal. A hose formed of a resin is preferable; in particular, it is more preferable to use hoses such as the hose A, hose B, or hose C, described above, with the hose A being particularly preferable.

The refrigeration system according to the present disclosure can suppress refrigerant loss during the circulation of a heat transfer fluid containing fluoroethylene, thereby stably transporting fluoroethylene. Thus, the refrigeration system according to the present disclosure can be suitably used in various refrigerating machines and various air conditioners, such as in stationary refrigeration or air conditioning in buildings, or in mobile refrigeration or air conditioning in vehicles.

The hose for a refrigeration system according to the present disclosure encompasses the hose A, hose B, and hose C described above. These hoses for refrigeration systems can be suitably used in the refrigeration system of the present disclosure. The hose for a refrigeration system according to the present disclosure can also be suitably used as a hose for transporting the heat transfer fluid containing fluoroethylene.

In identifying the invention encompassed by the present disclosure, the technical elements (properties, structures, functions, etc.) described in each embodiment of the present disclosure may be combined in any manner. Specifically, the present disclosure encompasses all subject matter formed of any and all possible combinations of technical elements described in the present specification.

Examples

The present invention is described in more detail below with reference to Examples. However, the present invention is not limited to the embodiments of these Examples.

Example 1

A hose composed of a core layer (innermost layer) made of polyamide 6 (PA6), a rubber layer (inner layer) made of butyl rubber (IIR) and ethylene propylene diene rubber (EPDM), a support layer made of polyethylene terephthalate (PET), and a cover layer (outer layer) made of butyl rubber (IIR) and ethylene propylene diene rubber (EPDM) (Hose-Flexible, High (92490-4BC0A) manufactured by Bridgestone Corporation) was subjected to swaging at both ends. The hose was capped at one end with a valve attached to the other end to prepare a test hose. The hose permeation rate ($kg/m^2/year$) of the heat transfer fluid through the test hose was measured with reference to the procedure outlined in the SAE J3062 standard. In this test, a mixture of HFO-1132(E) and HFO-1234yf (containing 77 mass% of HFO-1234yf) was used as the heat transfer fluid, and the test hose was filled with this heat transfer fluid to achieve 80 vol% at 80°C. The test hose filled with the heat transfer fluid was placed in a thermostatic bath and kept at 80°C for 25 days. The hose was taken out at predetermined intervals and measured for weight each time. The amount of the heat transfer fluid reduced from the initial amount of the heat transfer fluid placed in the hose was determined to be refrigerant loss. Ultimately, at the final phase of the test period (i.e., during the last five days), the weight was measured five times at intervals of at least 24 hours. The total amount of reduction in the final phase of the test was divided by the number of days (5 days) of the period, and the result was multiplied by coefficient R defined in the following formula (a) to calculate the hose permeation rate ($kg/m^2/year$).

$$\texttt{Coefficient R = 365.24/(}\Pi \texttt{ × D × L)} \qquad \texttt{(a)}$$

In formula (a), 365.24 is the number of days per year (days), D represents the inner diameter (mm) of the hose used in the test, and L represents the length (mm) of the rubber part of the hose used in the test.

Example 1A

The hose permeation rate ($kg/m^2/year$) was measured in the same manner as in Example 1, except that the following hose was used: a hose (manufactured by ContiTech) composed of a core layer (innermost layer) formed of an inner core layer made of polyamide 6 (PA6) and an outer core layer made of EVOH (ethylene content: 27 mol%, free volume: 40 $Å^3$), a rubber layer (inner layer) made of butyl rubber (IIR), a support layer made of aramid fiber (AR), and a cover layer (outer cover layer) made of ethylene propylene rubber (EPM) stacked in this order.

Reference Example 1

The hose permeation rate ($kg/m^2/year$) was measured in the same manner as in Example 1, except that the heat transfer fluid was changed to HFO-1234yf alone.

Table 1

| | Heat Transfer Fluid | Hose Permeation Rate ($kg/m^2/year$) |
|---|---|---|
| Reference Example 1 | HFO-1234yf | 0.75 |
| Example 1 | HFO-1132 (E) and HFO-1234yf | 3.43 |

Table 1 indicates a low hose permeation rate even for the heat transfer fluid containing fluoroethylene (HFO-1132(E)) as in Example 1. Moreover, the hose used in Example 1A had an even lower hose permeation rate. This indicates that using the hose A in transporting a heat transfer fluid containing fluoroethylene can suppress the refrigerant loss during transport and stably transport fluoroethylene.

Evaluation of Hose Material Stability

Examples 2 to 11

The stability of different hose materials was evaluated with reference to the procedure outlined in the SAE J2670 standard. An autoclave was used as a test vessel, and the vessel was filled with refrigeration oil, a hose material, and a heat transfer fluid to perform evaluation. In this test, ND-OIL 11 was used for the refrigeration oil. The hose used was the same as that used in Example 1, except that the core layer (innermost layer) of the hose material was changed to EPDM in Examples 2 and 3, changed to IIR in Examples 4 and 5, changed to PA6 in Examples 6 and 7, and changed to HNBR in Examples 8 and 9. The (dumbbell-shaped) test specimen of the hose material was a test specimen No. 7 described in JIS K7139 and prepared with a thickness of 2 mm. The heat transfer fluid used was a mixture of HFO-1132(E) and HFO-1234yf (containing 77 mass% of HFO-1234yf) or HFO-1234yf, and the autoclave was filled with the heat transfer fluid to achieve an absolute pressure of 3 MPa at 150°C. In Examples 2, 4, 6, 8, and 10, HFO-1234yf was used for the heat transfer fluid. In Examples 3, 5, 7, 9, and 11, a mixture of HFO-1132(E) and HFO-1234yf (containing 77 mass% of HFO-1234yf) was used for the heat transfer fluid. The autoclave filled with the heat transfer fluid was placed in a thermostatic bath and maintained at 150°C for 720 hours (200 hours when the hose material was PA6). After the test, the test specimen was taken out and measured for weight, thickness, and strain at break. The rate of change of these before and after measurement was then calculated.

Table 2

| Table 2-1 (Hose Material: EPDM) | | | |
|---|---|---|---|
| EPDM | Rate of Change in Weight (%) | Rate of Change in Thickness (%) | Rate of Change in Strain at Break (%) |
| Example 2 | -3.9 | -1.0 | -47 |
| Example 3 | -3.8 | -0.3 | -47 |

Table 2-2 (Hose Material: IIR)

| IIR | Rate of Change in Weight (%) | Rate of Change in Thickness (%) | Rate of Change in Strain at Break (%) |
|---|---|---|---|
| Example 4 | 5.4 | 0.6 | -31 |
| Example 5 | 5.1 | 3.3 | -35 |

Table 2-3 (Hose Material: PA6)

| PA6 | Rate of Change in Weight (%) | Rate of Change in Thickness (%) | Rate of Change in Strain at Break (%) |
|---|---|---|---|
| Example 6 | -3.0 | -1.3 | -73 |
| Example 7 | -2.7 | -1.7 | -73 |

Table 2-4 (Hose Material: HNBR)

| HNBR | Rate of Change in Weight (%) | Rate of Change in Thickness (%) | Rate of Change in Strain at Break (%) |
|---|---|---|---|
| Example 8 | -3.1 | -2.7 | -29 |
| Example 9 | -3.0 | -6.0 | -27 |

Table 2-5 (Hose Material: CR)

| CR | Rate of Change in Weight (%) | Rate of Change in Thickness (%) | Rate of Change in Strain at Break (%) |
|---|---|---|---|
| Example 10 | -5.3 | -3.0 | -53 |
| Example 11 | -4.3 | -2.6 | -55 |

As shown in Tables 2-1 to 2-5, a comparison between Examples 2 and 3, a comparison between Examples 4 and 5, a comparison between Examples 6 and 7, a comparison between Examples 8 and 9, and a comparison between Examples 10 and 11 indicate that the stability of each rubber material against HFO-1234yf and the stability of each rubber material against a mixture of HFO-1132E and HFO-1234yf (rate of change in weight, thickness, and strain at break) were equivalent.

## Claims

1. A method for transporting a heat transfer fluid in a refrigeration system or air conditioning system, comprising a circulation step of circulating the heat transfer fluid through at least one hose in the system,
   wherein

   the heat transfer fluid contains fluoroethylene, and
   the at least one hose is formed of a resin.

2. The method according to claim 1, wherein the fluoroethylene contains at least one member selected from the group consisting of trifluoroethylene and 1,2-difluoroethylene.

3. The method according to claim 2, wherein the fluoroethylene contains (E)-1,2-difluoroethylene.

4. The method according to any one of claims 1 to 3,
   wherein the circulation step comprises at least one step selected from the group consisting of

   the step of circulating the heat transfer fluid from the hose connected between an outlet of a compressor and an inlet of a condenser;
   the step of circulating the heat transfer fluid through the hose connected between an outlet of a condenser and an inlet of an evaporator; and
   the step of circulating the heat transfer fluid through the hose connected between an outlet of an evaporator and an inlet of a compressor.

5. A refrigeration method comprising the step of performing refrigeration using the method according to any one of claims 1 to 3.

6. A refrigeration system comprising a hose for circulating a heat transfer fluid,
   wherein

   the heat transfer fluid contains fluoroethylene, and
   the hose is formed of a resin.

7. The refrigeration system according to claim 6, wherein the fluoroethylene is at least one member selected from the group consisting of trifluoroethylene and 1,2-difluoroethylene.

8. The refrigeration system according to claim 6, wherein the fluoroethylene contains (E)-1,2-difluoroethylene.

9. A hose for a refrigeration system, which is for use in the refrigeration system of any one of claims 6 to 8.

Fig. 1

Fig. 2

## INTERNATIONAL SEARCH REPORT

| International application No. |
| --- |
| **PCT/JP2023/023237** |

### A. CLASSIFICATION OF SUBJECT MATTER

*F25B 41/40*(2021.01)i; *F25B 1/00*(2006.01)i
FI:    F25B41/40 C; F25B1/00 396Z

According to International Patent Classification (IPC) or to both national classification and IPC

### B. FIELDS SEARCHED

Minimum documentation searched (classification system followed by classification symbols)

F25B1/00-49/04; F24F1/00-13/32; B60H1/00-3/06; F16L11/04-11/133

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2021-46490 A (YOKOHAMA RUBBER CO LTD) 25 March 2021 (2021-03-25) paragraph [0010] | 1-2 |
| Y | | 1-9 |
| X | JP 2010-513827 A (E.I. DU PONT DE NEMOURS AND COMPANY) 30 April 2010 (2010-04-30) paragraphs [0023]-[0030], fig. 1 | 9 |
| Y | | 1-9 |
| Y | JP 2022-63099 A (DAIKIN IND LTD) 21 April 2022 (2022-04-21) paragraph [0037] | 2-5, 7-9 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 August 2023** | **05 September 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

EP 4 545 880 A1

## INTERNATIONAL SEARCH REPORT
### Information on patent family members

International application No.

**PCT/JP2023/023237**

| Patent document cited in search report | | | Publication date (day/month/year) | Patent family member(s) | | | Publication date (day/month/year) |
|---|---|---|---|---|---|---|---|
| JP | 2021-46490 | A | 25 March 2021 | US 2022/0325095 A1 paragraph [0024] <br> WO 2021/054058 A1 <br> CN 114402027 A | | | |
| JP | 2010-513827 | A | 30 April 2010 | US 2009/0314015 A1 paragraphs [0025]-[0032], fig. 1 <br> WO 2008/027555 A2 <br> EP 2602299 A2 <br> CA 2661007 A1 <br> KR 10-2009-0049617 A <br> CN 101827912 A | | | |
| JP | 2022-63099 | A | 21 April 2022 | WO 2022/075388 A1 paragraph [0037] | | | |

Form PCT/ISA/210 (patent family annex) (January 2015)

15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010513827 A
- JP 2002370273 A
- JP 2006029443 A
- WO 2017010335 A